# EUROPEAN PATENT SPECIFICATION

(11) **EP 1 251 089 B1**
(45) Date of publication and mention of the grant of the patent: **16.06.2004**
(21) Application number: 99961073.6
(22) Date of filing: 02.12.1999
(51) Int. Cl.: B65G 67/02

(54) **MERCHANDISE LOADING/UNLOADING DOCK TO AND FROM VEHICLES**
WARENFÖRDERANLAGE FÜR AUF- UND AUSLADEN AUF UND AUS FAHRZEUGEN
QUAI DE CHARGEMENT/DECHARGEMENT POUR MARCHANDISES TRANSPORTEES DANS DES VEHICULES

(43) Date of publication of application: 23.10.2002
(73) Proprietor: Sociedad Anonima Damm, 08025 Barcelona (ES)
(72) Inventor: MARIN, Pedro, E-8025 Barcelona (ES)
(74) Representative: Elzaburu Marquez, Alberto
(86) International application number: PCT/ES1999/000391
(87) International publication number: WO 2001/040089

(56) References cited:
- EP-A1- 0 930 258
- DE-A1- 19 622 792
- US-A- 3 993 000

## Description

### Field of the Invention

This invention refers to a dock for loading/unloading grouped goods in containers or on pallets in/from vehicles.

### Background of the Invention

Among the devices known for loading/unloading goods grouped in containers or on pallets, the most important background known by the applicant are those described, for example, in patent GB 2126189.

These devices for loading/unloading vehicles in a single operation use mobile means in the form of skates to move objects in and out of the truck and vertical displacement devices based on inflatable and deflatable pipes to perform the elevation/deposit operations of the truck load to be loaded/unloaded from vehicles.

EP 0 930 258, upon which the preamble of claims 1 and 4 is based, discloses an automatic installation for lateral loading and unloading of pallets on lorries including a bridge aligned parallel to the side of the lorry with a telescopic crane and a feeding line for paired pallets.

### Summary of the Invention

According to the first object of the invention, a dock for loading/unloading goods grouped in containers or on pallets from/in vehicles and specially trucks, consisting of separate lines for loading and unloading is provided. The configuration of these lines follows the model of know devices: the loading line includes a platform over which mobile means are arranged to be introduced in the truck to deposit the load and a pre-loading bay. Likewise, the unloading line includes a platform in which mobile means are arranged to be introduced in the truck to remove its load and post-unloading bay.

The bases of the mentioned platforms, have means which, together, may move over at least two rails located beneath said platform perpendicularly to the loading and unloading directions; the dock includes devices to control the mentioned platform movement so that one or the other may be located immediately behind the vehicle to be loaded/unloaded.

According to the second object of the invention, the loading/unloading dock includes a first feed/evacuation device for the pre-loading and post-unloading devices consisting of feeding/evacuation tables of the pre-loading and post-unloading bays with entry/exit lines for pallets, one by one, arranged as an extension of the side edges of said tables, perpendicular to the loading/unloading lines.

It also includes a second feeding/evacuation device of the pre-loading and post-unloading bays formed by auxiliary tables to feed/evacuate pallets to/from the mentioned feeding/evacuation tables from the first device with one-by-one pallet entry/exit lines arranged in the same direction as the loading/unloading lines, said auxiliary tables having means to move in a direction perpendicular to that of the loading/unloading lines to be positioned at the side of each one of the two halves of the feeding/evacuation tables of the first device.

According to the third object of the invention, the loading/unloading dock includes numerous pre-loading and post-unloading bays, means for making the loading and unloading platforms move over the rails, such that the loading platform may be situated in front of any pre-loading bay and the unloading platform in front of any post-unloading bay and means for the feeding/evacuation of the pre-loading and post-unloading bays, according to the second object of the invention, complemented with mobile trolleys to transfer goods to the pre-loading and post-unloading bays.

The loading/unloading dock, object of the invention, is especially suitable for use in totally computerised goods handling systems in plants or distribution centres, assuring that the goods brought by a truck may be unloaded and then immediately replaced by loading the truck with fresh goods.

### Description of the Figures

Figure 1 is a schematic view of the operation of a goods loading/unloading device in trucks, known in the art and used in the loading/unloading dock, object of this invention.
Figures 2a and 2b are schematic section views of the mobile devices used in said device.
Figure 3 is a schematic plan view of the known goods loading/unloading device used in the loading/unloading dock, object of this invention.
Figure 4 is a schematic view of the loading/unloading dock, according to the first object of this invention.
Figure 5 shows the operation of the loading/unloading dock according to the first object of this invention.
Figure 6 is a schematic plan view of the loading/unloading dock, according to the second object of this invention.
Figure 7 is a schematic plan view of the loading/unloading dock, according to the third object of this invention.

### Detailed Description of the Invention

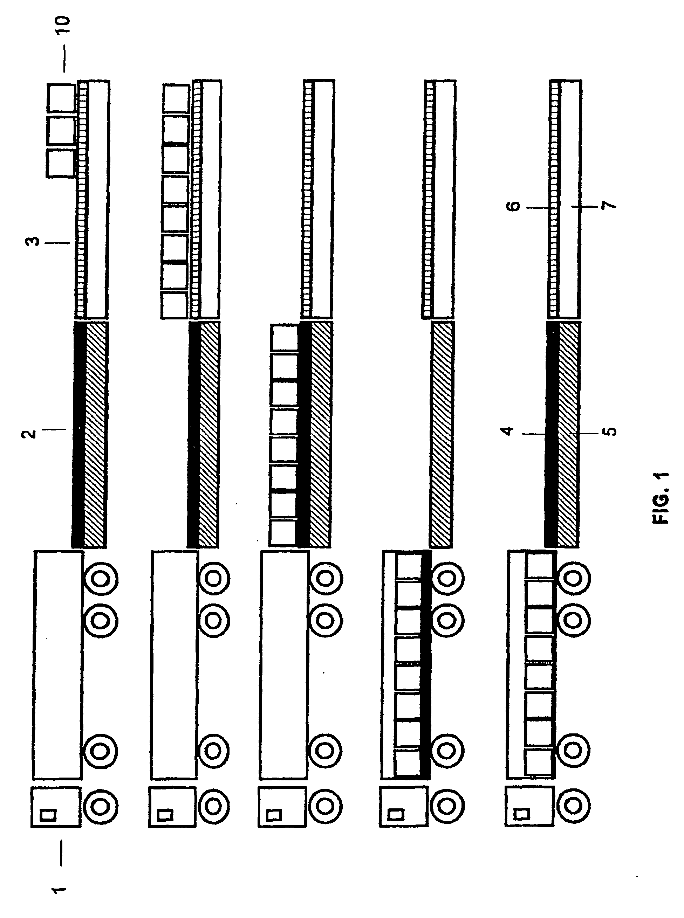

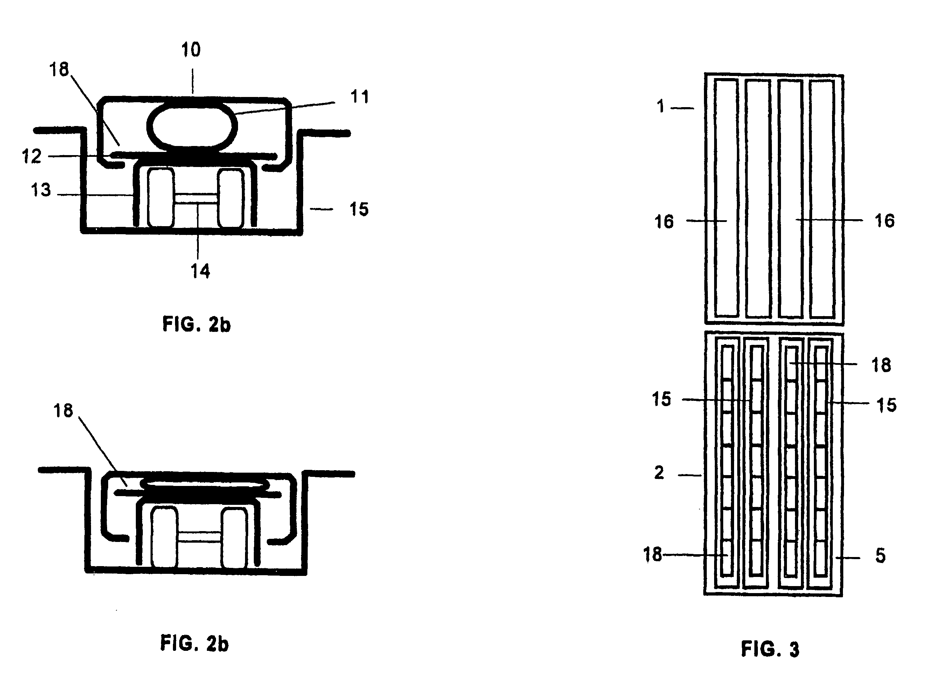

In the loading/unloading' dock, object of this invention, a type of loading/unloading device is used, known in the art described below in relation to figures 1, 2 and 3.

Said device consists of a loader/unloader 2, consisting of a platform 5 over which mobile means 4 are arranged, capable of being introduced in a vehicle to deliver or remove as a block all its load, and a pre-loading/post-unloading bay 3 consisting of a base 7 and means 6 to prepare the goods to be transferred or received from the loader/unloader 2.

Figure 1 shows the operation of said device, by means of a sequence of operations to load a truck. By following the figure from top to bottom, it is observed that firstly, the pallets 10 are prepared in the pre-loading bay 3 until completing the load foreseen for the truck. Secondly, the load of the pre-loading bay 3 is transferred to the loader 2. Thirdly, the means 4 are introduced in the truck, depositing the load and returning to their initial position.

The means 4 basically consist of forks 18 movable along rails 15 located on the platform 5, the truck 1 having rails 16 aligned with the rails 15 of the loader/unloader 2 for displacement of the fork 18 from the latter to the truck, and viceversa.

The forks 18 consist of a supporting loading surface 10, vertically movable by means of inflation/deflation of the pipes 11 located on a plate 12 co-operating with rolling means 14, situated beneath the frame 13.

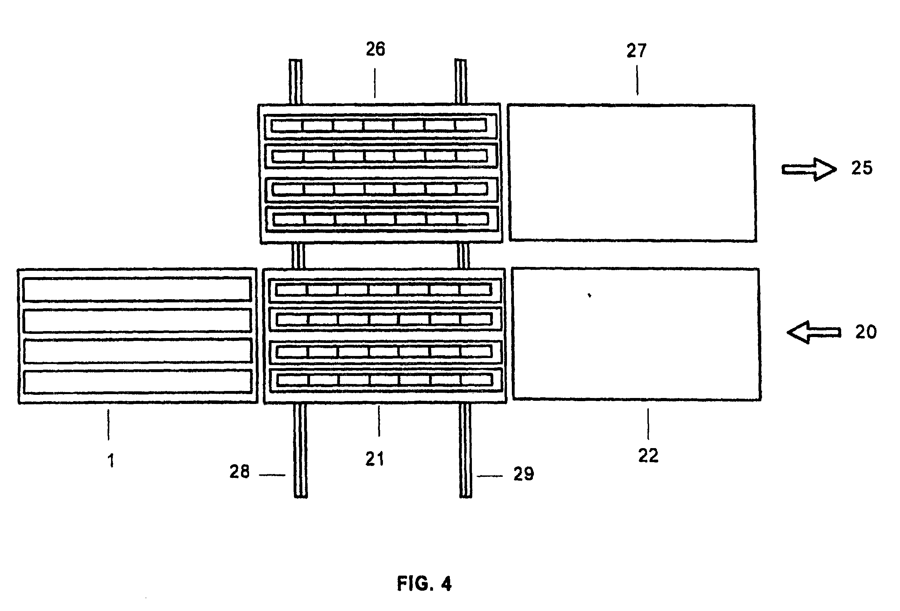

According to the first object of the invention, and as shown in figure 4, the loading/unloading dock includes a loading line 20 and an unloading line 25, parallel to each other. The loading line 20 consists of a platform 21 over which one or several forks are arranged and a pre-loading bay 22. The unloading line 25 consists of a platform 26 over which one or several forks are arranged and a post-unloading bay 27. The platforms 21, 26 and the pre-loading and post-unloading bays 22 and 27, respectively, have conventional devices, for example, conveyor belt circuits, not shown in figure 4 to transfer goods between them.

Beneath the platforms 21, 26 there are two rails 28, 29 in a direction perpendicular to that of loading/unloading so that the set of platforms 21, 26 move over them, by means of devices permitting that the platform 21 or the platform 26 remain opposite the truck 1 to perform the loading/unloading operations. To perform said joint displacement, the platforms 21, 26 have interlocking means thereof and devices to facilitate displacement, including a guided body on at least one of the rails 28, 29, not shown in figure 4.

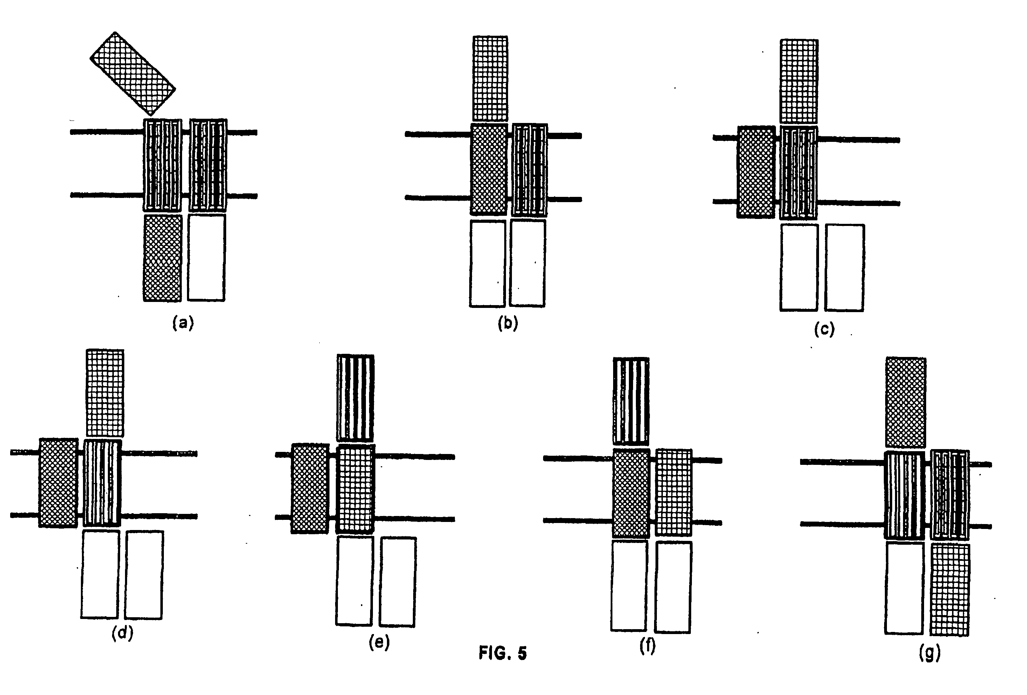

By means of the structuring described, a loading/unloading dock is provided, permitting the performance of truck unloading and immediately afterwards, loading, as indicated in figure 5, reproduced in several situations by the dock shown in figure 4, shown without reference numbers for reasons of simplicity.

In situation (a), the preparation of the load destined to a truck in the pre-loading bay is shown, while the truck approaches the dock.

In situation (b), the transfer of the load destined to the truck takes place from the loading bay to the loader.

In situation (c), in which the truck has already been suitably positioned in the dock, the loader and unloader are displaced sideways, such that the latter is aligned with the truck.

In situation (d), unloader forks are introduced in the truck to unload it.

In situation (e), the unloader forks have left the truck with the goods to be unloaded.

In situation (f), the loader and unloader move sideways, such that the loader is aligned with the truck.

In situation (g), the loader forks have been introduced in the truck with the load to be deposited in it and the goods coming from the truck have been transferred from the unloader to the post-unloading bay.

According to the second object of the invention, feeding/evacuation devices of the pre-loading and post-unloading bays 22 and 27 are incorporated to the loading dock.

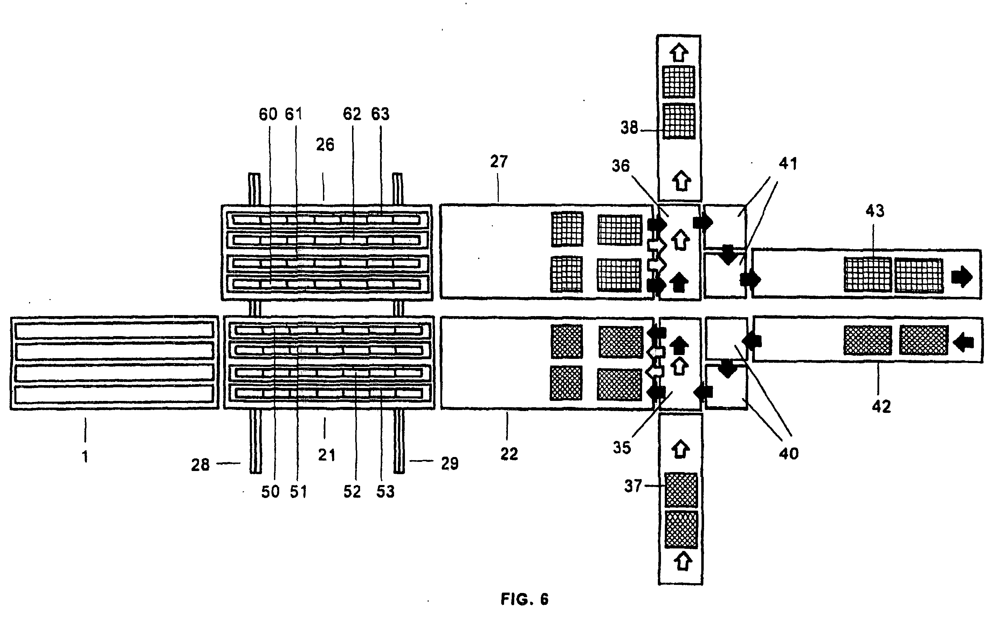

A first device, according to figure 6, consists of the feeding table 35 of the pre-loading bay 22 and the entry line 37, and by the evacuation table 36 of the post-unloading bay 27 and exit line 38. In this device, the pallets circulate in the directions indicated by the white arrows, using conventional systems, for example, roller systems not shown in figure 6.

A second device, formed by the mentioned feeding/evacuation tables 35 and 36; by the auxiliary tables 40, 41 and the entry/exit lines 42, 43. In this device, the pallets circulate in the directions indicated by the black arrows, table 41 being displaced from one position to another as shown in the figure.

The loading/unloading dock, incorporating the two mentioned feeding/evacuation devices facilitates the handling of pallets of different shapes through each one of them, as may be seen in figure 6.

On the other hand, it may be observed that the dock is structured to handle pallets in pairs and that the loader 21 and the unloader 26 have four forks 50, 51, 52, 53; 60, 61, 62, 63, such that each row of pallets is supported by two forks. This configuration is especially suitable to be used in a completely computerised truck loading/unloading system with containers or pallets with widths somewhat less than half the section of their semitrailers.

Likewise, it will be observed that the configuration of the entry/exit lines of the feeding/evacuation devices are particularly suitable for using automatically guided vehicles or manually operated trolleys as means to carry pallets in pairs to the dock and remove them from it, being located at the ends of the mentioned entry/exit lines.

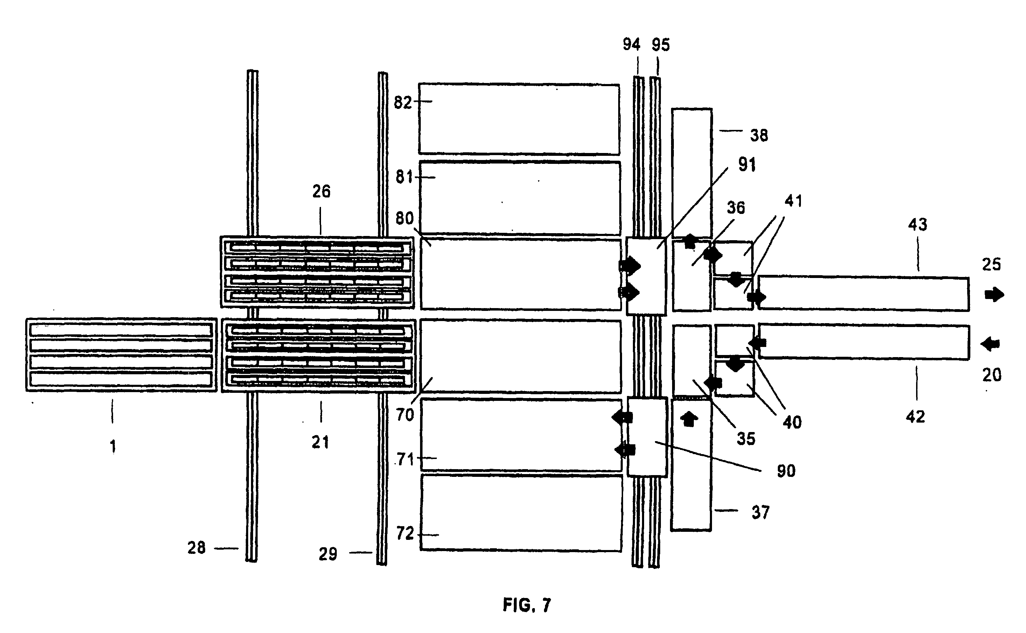

According to the third object of the invention and to what is shown in figure 7, the dock includes several pre-loading bays 70, 71, 72; several post-unloading bays 80, 81, 82; means such that on the one hand, the loading platform 21 may move across the rails 28, 29, such that they remain opposite to the truck 1 and the pre-loading bays 70, 71, 72 and likewise, so that the unloading platform 26 may be moved along the rails 28, 29, such that they may remain opposite the truck 1 and the post-unloading bays 80, 81, 82; and mobile trolleys 90, 91 over rails 94, 95 to transfer goods between the mentioned pre-loading and post-unloading bays and the feeding/evacuation devices shown in the right part of the figure, identical to figure 6.

By means of this structuring, a loading/unloading dock is provided which besides the objects already mentioned, adds the incorporation of temporary goods storage devices which are especially useful in the logistic systems of plants or distribution centres with small temporary goods storage requirements, both avoiding the need of areas specifically destined for such a object and, especially, because on using the mentioned pre-loading and post-unloading bays as means of temporary storage, this drastically reduces the movement of goods, caused by the requirements of temporary storage.

Although an embodiment of the invention has been described and shown, it is obvious that modifications may be introduced within the scope thereof, not being limited to this execution but to the contents of the following claims.

## Claims

1. A dock for loading/unloading goods grouped on pallets or containers from/to vehicles including vertically displaceable mobile loader/unloader platforms over which several forks are arranged and pre-loading/post-unloading bays,
a) whereby said dock is formed by a loading line (20) and an unloading line (25), said loading line (20) having a loading platform (21) and a pre-loading bay (22), and said unloading line (25) having an unloading platform (26) and a post-unloading bay (27) **characterised in that** :
b) it includes means for allowing said loading and unloading platforms (21, 26) to move together perpendicular to the loading and unloading directions on at least two rails (28, 29) located beneath said platforms (21, 26); and,
c) it includes means for controlling said movement of said platforms (21, 26), such that one or other may be located immediately behind the vehicle (1) to be loaded/unloaded.

2. A loading/unloading dock, according to claim 1, **characterised in that** it also includes a feeding/evacuation device of said bays (22, 27) consisting of feeding/evacuation tables (35, 36) for the feeding/evacuation of pallets in pairs and entry/exit lines (37, 38) of pallets, one by one, arranged as an extension of the side edges of said tables (35, 36).

3. A loading/unloading dock, according to claim 2, **characterised in that** it also includes a feeding/evacuation device of said bays (22, 27) formed by auxiliary tables (40, 41) for pallet feeding/evacuation in pairs to/from the feeding/evacuation tables (35, 36) with entry/exit lines (42, 43) of pallets, one by one, arranged in the same direction as the loading/unloading lines, said auxiliary tables (40, 41) having means to move in a direction perpendicular to that of the loading/unloading lines, to be positioned next to one of the two halves of the feeding/evacuation tables (35, 36).

4. A dock for loading/unloading goods grouped on pallets or containers from/to vehicles including vertically displaceable mobile loader/unloader platforms over which several forks are arranged and pre-loading/post-unloading bays,
a) whereby said dock is formed by a loading line (20) and an unloading line (25), said loading line (20) having a loading platform (21), and several pre-loading bays (70, 71, 72), and said unloading line (25) having an unloading platform. (26) and several post-unloading bays (80, 81, 82);
b) whereby it includes means for allowing said loading and unloading platforms (21, 26) to move independently in a direction perpendicular to the loading and unloading directions, **characterised in that** said loading and unloading platforms (21,26) are movable on at least two rails (28, 29) located beneath said platforms (21, 26); and
c) **in that** it includes means for controlling said movement of said platforms (21, 26), such that the loading platform (21) may be located behind the vehicle (1) and in front of any pre-loading bay (70, 71, 72) and the unloading platform (26) may be located behind the vehicle (1) and in front of any post-unloading bay (80, 81, 82).

5. A loading/unloading dock, according to claim 4, **characterised in that** it also includes bay feeding/evacuation devices with the same characteristics as those mentioned in claims 2 and 3; a first mobile trolley (90) on rails (94, 95) to transfer goods from the feeding table (35) to the pre-loading bays (70, 71, 72) and a second mobile trolley (91) to transfer goods from the post-unloading bays (80, 81, 82) to the evacuation table (36).

## Patentansprüche

1. Ladeplatz für das Beladen/Entladen von auf Paletten oder Containern gruppenweise angeordneten Waren auf/von Fahrzeugen, die bewegliche Belade-/Entladepritschen, die senkrecht verfahrbar sind, auf denen mehrere Gabeln angeordnet sind, und Vorlade-/Nachentladeplätze aufweisen, **dadurch gekennzeichnet**:
a) dass der genannte Ladeplatz aus einer Linie (20) zum Beladen und einer Linie (25) zum Entladen besteht, wobei die genannte Linie (20) zum Beladen eine Beladepritsche (21) und einen Vorladeplatz (22) aufweist und die genannte Linie (25) zum Entladen eine Entladepritsche (26) und einen Nachentladeplatz (27) aufweist;
b) dass er Mittel aufweist, die es ermöglichen, dass die genannten Belade- und Entladepritschen (21, 26) sich gemeinsam senkrecht zu den Belade- und Entladerichtungen bewegen, in mindestens zwei Schienen (28, 29), die sich unter den genannten Pritschen (21, 26) befinden; und
c) dass er Mittel aufweist, um die genannte Bewegung der genannten Pritschen (21, 26) zu steuern, so dass die Eine oder die Andere direkt hinter dem zu beladenden/entladenden Fahrzeug (1) angeordnet werden kann.

2. Belade-/Entladeplatz nach Anspruch 1, **dadurch gekennzeichnet, dass** er auch eine Zuführungs-/Abtransportvorrichtung für die genannten Plätze (22, 27) aufweist, die aus Tischen (35, 36) besteht, für das paarweise Zuführen/Abtransportieren von Paletten, und aus Linien (37, 38) für die Zufuhr/Abfuhr von Paletten, jeweils einer nach der anderen, wobei diese als Verlängerung der Seitenränder der genannten Tische (35, 36) angeordnet sind.

3. Belade-/Entladeplatz nach Anspruch 2, **dadurch gekennzeichnet, dass** er auch eine Zuführungs-/Abtransportvorrichtung für die genannten Plätze (22, 27) aufweist, die aus Hilfstischen (40, 41) besteht für das paarweise Zuführen/Abtransportieren von Paletten zu/von den Zuführungs-/Abtransporttischen (35, 36) mit Linien (42, 43) für die Zufuhr/Abfuhr von Paletten, jeweils eine nach der anderen, wobei diese in die gleiche Richtung angeordnet sind wie die Belade-/Entladelinien, wobei die genannten Hilfstische (40, 41) Mittel aufweisen, um sich in eine senkrechte Richtung zu den Belade-/Entladelinien zu bewegen, die nahe bei einer der beiden Hälften der Zuführungs-/Abtransporttische (35, 36) aufzustellen sind.

4. Ladeplatz für das Beladen/Entladen von auf Paletten oder Containern gruppenweise angeordneten Waren auf/von Fahrzeugen, die bewegliche Belade-/Entladepritschen, die senkrecht verfahrbar sind, auf denen mehrere Gabeln angeordnet sind, und Vorlade-/Nachladeplätze aufweisen, **dadurch gekennzeichnet**:
a) dass der genannte Ladeplatz aus einer Linie (20) zum Beladen und einer Linie (25) zum Entladen besteht, wobei die genannte Linie (20) zum Laden eine Ladepritsche (21) und mehrere Vorladeplätze (70, 71, 72) aufweist und die genannte Linie (25) zum Entladen eine Entladepritsche (26) und mehrere Nachentladeplätze (80, 81, 82) aufweist;
b) dass er Mittel aufweist, die es ermöglichen, dass die genannten Belade- und Entladepritschen (21, 26) sich unabhängig voneinander senkrecht zu den Belade- und Entladerichtungen bewegen, in mindestens zwei Schienen (28, 29), die sich unter den genannten Pritschen (21, 26) befinden; und
c) dass er Mittel aufweist, um die genannte Bewegung der genannten Pritschen (21, 26) zu steuern, so dass die Ladepritsche (21) direkt hinter dem Fahrzeug (1) oder vor einem der Vorladeplätze (70, 71, 72) angeordnet werden kann und die Entladepritsche (26) hinter dem Fahrzeug (1) oder vor einem der Nachentladeplätze (80, 81, 82) angeordnet werden kann.

5. Belade-/Entladeplatz nach Anspruch 4, **dadurch gekennzeichnet, dass** er auch Zuführungs-/Abtransportvorrichtungen für die Ladeplätze, mit denselben Merkmalen, die in den Ansprüchen 2 und 3 erwähnt wurden; einen ersten beweglichen Schlitten (90) auf Schienen (94, 95), um Waren vom Zuführungstisch (35) zu den Vorladeplätzen (70, 71, 72) zu überführen und einen zweiten beweglichen Schlitten (91), um Waren von den Nachentladeplätzen (80, 81, 82) zum Abtransporttisch (36) zu überführen aufweist.

## Revendications

1. Quai de chargement/déchargement de marchandises regroupées sur des palettes ou des conteneurs depuis/sur des véhicules qui comprennent des plate-formes de chargements/déchargement mobiles, avec une capacité de déplacement vertical, sur lesquels sont disposées diverses fourches, et quais de pré-chargement/après-déchargement, **caractérisé**:
a) en ce que ledit quai est formé d'une ligne (20) de chargement et une ligne (25) de déchargement, ladite ligne (20) de chargement ayant une plate-forme (21) de chargement et un quai (22) de pré-chargement, et ladite ligne (25) de déchargement ayant une plate-forme (26) de déchargement et un quai (27) d'après-chargement;
b) en ce qu'il comprend des moyens pour permettre que lesdites plate-formes (21, 26) de chargement et de déchargement se déplacent ensemble, perpendiculairement aux directions de chargement et déchargement, dans au moins deux rails (28, 29) situés sous lesdites plate-formes (21, 26); et,
c) en ce qu'il comprend des moyens pour contrôler ledit mouvement desdites plate-formes (21, 26), de manière que l'une ou l'autre puisse se situer immédiatement derrière le véhicule (1) à charger/décharger.

2. Quai de chargement/déchargement selon la revendication 1, **caractérisé en ce qu'**il comprend aussi un dispositif d'alimentation/évacuation desdits quais (22, 27), qui comprend des tables (35, 36) pour l'alimentation/évacuation de palettes par paires et des lignes (37, 38) d'entrée/sortie de palettes, l'une après l'autre, disposées en guise de prolongement des bords latéraux desdites tables (35, 36).

3. Quai de chargement/déchargement selon la revendication 2, **caractérisé en ce qu'**il comprend également un dispositif d'alimentation/évacuation desdits quais (22, 27), formé de tables (40, 41) auxiliaires pour l'alimentation/évacuation de palettes par paires sur/depuis les tables (35, 36) d'alimentation/évacuation avec des lignes (42, 43) d'entrée/sorties de palettes, l'une après l'autre, disposées dans la même direction que les lignes de chargement/déchargement, lesdites tables (40, 41) auxiliaires ayant des moyens pour se déplacer dans une direction perpendiculaire à celle des lignes de chargement/déchargement, destinées à être mises en place près de l'une des deux moitiés des tables (35, 36) d'alimentation/évacuation.

4. Quai de chargement/déchargement de marchandises regroupées sur des palettes ou des conteneurs depuis/sur des véhicules comprenant des plate-formes de chargement/déchargement mobiles, ayant une capacité de déplacement vertical, sur lesquelles sont disposées diverses fourches, et quais de préchargement/après-chargement, **caractérisé**:
a) en ce que ledit quai est formé d'une ligne (20) de chargement et une ligne (25) de déchargement, ladite ligne (20) de chargement ayant une plate-forme (21) de chargement et divers quais (70, 71, 72) de pré-chargement, et ladite ligne (25) de déchargement ayant une plate-forme (26) de déchargement et divers quais (80, 81, 82) d'après-chargement;
b) en ce qu'il comprend des moyens pour permettre que lesdites plate-formes (21, 26) de chargement et de déchargement se déplacent indépendamment, dans une direction perpendiculaire aux directions de chargement et déchargement, dans au moins deux rails (28, 29) situés sous lesdites plate-formes (21, 26); et,
c) en ce qu'il comprend des moyens pour contrôler ledit mouvement desdites plate-formes (21, 26), de manière que la plate-forme (21) de chargement puisse être située immédiatement derrière le véhicule (1) ou devant n'importe quel quai (70, 71, 72) de pré-chargement, et la plate-forme (26) de déchargement peut être située derrière le véhicule (1) ou devant n'importe quel quai (80, 81, 82) d'après-chargement.

5. Quai de chargement/déchargement selon la revendication 4, **caractérisé en ce qu'**il comprend également des dispositifs d'alimentation/évacuation de quai avec les mêmes caractéristiques que celles mentionnés dans les revendications 2 et 3; un premier chariot (90) mobile sur des rails (94, 95) pour transférer des marchandises depuis la table (35) d'alimentation jusqu'aux quais (70, 71, 72) de pré-chargement, et un deuxième chariot (91) mobile pour transférer des marchandises depuis les quais (80, 81, 82) d'après-chargement vers la table (36) d'évacuation.
